# EUROPEAN PATENT APPLICATION

(11) **EP 4 621 954 A1**
(43) Date of publication of application: **24.09.2025**
(21) Application number: 24219625.1
(22) Date of filing: 12.12.2024
(51) Int. Cl.: H01M 50/211, H01M 50/244, H01M 50/264, H01M 50/291, H01M 50/543

(54) **BUSBAR ASSEMBLY INCLUDING SUPPORT GUIDE AND BATTERY MODULE INCLUDING THE SAME**

(30) Priority: 19.03.2024 KR 20240037954
(71) Applicant: SK On Co., Ltd., Seoul 03161 (KR)
(72) Inventor: HONG, Sung Min, 34124 Daejeon (KR); CHOI, Yang Kyu, 34124 Daejeon (KR); RHEE, Seo Roh, 34124 Daejeon (KR); CHOI, Keun Woo, 34124 Daejeon (KR); CHO, Jun Hui, 34124 Daejeon (KR); LEE, Hee Jin, 34124 Daejeon (KR)
(74) Representative: Prüfer & Partner mbB Patentanwälte · Rechtsanwälte

(57) **Abstract**

A battery module includes a plurality of battery cells, each including a case and a sealing portion provided on at least one edge of the case, and including a first battery cell and a second battery cell adjacent to each other in a first direction; and a support frame opposite the plurality of battery cells and into which at least a portion of the sealing portion is inserted, wherein the support frame includes a support guide configured to guide at least portions of the sealing portion of the first battery cell and the sealing portion of the second battery cell to be spaced apart from each other in opposite directions with respect to the first direction.

## Description

### TECHNICAL FIELD

The present disclosure relates to a busbar assembly including a support guide and a battery module including the same.

### BACKGROUND

Differently from a primary battery, a secondary battery may be easily charged and discharged, and has drawn attention as a power source for various mobile devices and electric vehicles.

A secondary battery may include an electrode assembly in which a positive electrode plate, a negative electrode plate, and a separator may be stacked or wound in a form of roll, and may include a battery cell in which an electrode assembly are accommodated and sealed in a case. A plurality of battery cells may be stacked in a predetermined direction and may be accommodated in a battery module (or a battery pack). Battery cells accommodated in a battery module may be electrically connected to an external power source through electrode terminals of the battery module, such that charging and discharging may be performed.

During a process of assembling a battery module, when a portion of a case of a battery cell is in direct contact with an adjacent member formed of an electrically conductive material other than an electrode terminal, a current may leak to an electrode terminal through a path other than a current path, which may cause dielectric breakdown in which insulating performance of a battery module deteriorates.

When dielectric breakdown occurs, shorts may occur such that serious safety problems, such as fire may occur. Accordingly, it may be necessary to conduct a research on a structure to prevent dielectric breakdown of a battery cell during the process of assembling battery modules.

### SUMMARY

An embodiment of the present disclosure is to provide a battery module which may reduce or prevent degradation of insulating performance.

An embodiment of the present disclosure is to provide a battery module which may reduce or prevent dielectric breakdown by having a protrusion (referred to as "a shark-fin") of a battery cell in contact with an adjacent member.

An embodiment of the present disclosure is to provide a busbar assembly in which at least a portion of a plurality of battery cells are inserted such that sealing portions of adjacent battery cells are spaced apart from each other.

A battery module including a busbar assembly including a support guide may be widely applied in green technology fields such as an electric vehicle, a battery charging station, and a solar power generation and a wind power generation using batteries. Also, a battery module of the present disclosure may be used in eco-friendly electric vehicles, hybrid vehicles, or the like, to prevent climate change by preventing air pollution and greenhouse gas emission.

According to an aspect of the present disclosure, a battery module includes a plurality of battery cells, each including a case and a sealing portion provided on at least one edge of the case, and including a first battery cell and a second battery cell adjacent to each other in a first direction; and a support frame opposite the plurality of battery cells and into which at least a portion of the sealing portion is inserted, wherein the support frame includes a support guide configured to guide at least portions of the sealing portion of the first battery cell and the sealing portion of the second battery cell to be spaced apart from each other in opposite directions with respect to the first direction.

The battery module may further include a lower cover disposed below the plurality of battery cells, each of the plurality of battery cells may include a protrusion protruding from the case toward the lower cover, and a distance between a protrusion of the first battery cell and a protrusion of the second battery cell may increase toward the lower cover.

The support frame may include a frame body opposing the plurality of battery cells; and a plurality of support portions including a first support portion protruding between the first battery cell and the second battery cell and a second support portion adjacent to the first support portion, and the support guide may protrude to at least one side in a direction from the first support portion toward the second support portion.

The support guide may include a shape in which a size of protrusion from the first support portion increases in a direction toward the lower cover.

The support guide may include a shape in which a size of protrusion from the first support portion increases in a direction toward the frame body.

The second support portion may include a guide avoidance portion formed by cutting out a portion opposing the support guide, and the guide avoidance portion may include a shape in which a cutout width increases in a direction toward the lower cover.

A shape of at least a portion of the guide avoidance portion may correspond a shape of at least a portion of the support guide.

The support guide may be provided to be detachable from the first support portion.

The support guide may include a guide chamfer cutout at an edge directed downwardly.

The lower cover may include a fin accommodation portion including a fin accommodation groove in which at least a portion of the protrusion is accommodated.

The battery module may further include a fastening portion including a first fastening portion provided on a lower surface of the first support portion, a second fastening portion in which a fastening hole opposing the first fastening portion is formed, and a third fastening portion configured to couple the first fastening portion to the second fastening portion, and a protrusion of the first battery cell and a protrusion of the second battery cell may be spaced apart from each other in opposite directions with respect to the first direction in the fastening portion.

An area of a lower surface of the first support portion may be greater than an area of an upper surface of the fin accommodation portion opposing the lower surface of the first support portion.

According to an aspect of the present disclosure, a battery module includes a plurality of battery cells, each including a case and a sealing portion provided on at least one edge of the case, and including a first battery cell and a second battery cell adj acent to each other in a first direction; a lower cover disposed below the plurality of battery cells; a frame body disposed to oppose the plurality of battery cells; and a support portion protruding toward a region between the plurality of battery cells in the frame body, and including a first support portion disposed between the sealing portion of the first battery cell and the sealing portion of the second battery cell, wherein the sealing portion of the first battery cell and the sealing portion of the second battery cell are spaced apart from each other in opposite directions with respect to the first support portion as at least portions thereof approaches the lower cover.

According to an aspect of the present disclosure, a busbar assembly includes a frame body in which a busbar is seated on one surface thereof; a plurality of support portions protruding from the other surface of the frame body opposite to the one surface and spaced apart from each other in the first direction; an accommodation groove disposed between the plurality of support portions and into which at least a portion of a battery cell is inserted, wherein the plurality of support portions includes a first support portion including a support guide protruding in the first direction; a second support portion disposed adjacently to the first support portion in the first direction; and a third support portion disposed not adjacently to the first support portion.

The support guide may include at least one of a shape in which a protruding size increases in a direction toward the frame body, or a shape in which a protruding size increases downwardly.

The second support portion may include a guide avoidance portion formed by being cutout to oppose the support guide, and the guide avoidance portion may be configured to have a cutout size increasing downwardly such that a shape of at least a portion of the guide avoidance portion may correspond to a shape of at least a portion of the support guide.

The accommodation groove may include a first accommodation groove defined as a space between the first support portion and the second support portion; and a second accommodation groove defined as a space between the second support portion and the second support portion or the third support portion, and at least a portion of the first accommodation groove may be bent in a predetermined direction.

The first support portion may include a support guide protruding toward the second support portion, and the second support portion may include a guide avoidance portion disposed to oppose the support guide, the first accommodation groove may include a guide groove defined as a space between the support guide and the guide avoidance portion; and a support groove defined as a space not opposing the support guide and the guide avoidance portion, and the guide groove may form a predetermined angle with the support groove.

The support groove may be disposed parallel to the first support portion, and the guide groove may extend by being bent at a predetermined angle in a lower portion of the support groove.

The guide groove may be bent in a direction away from the first support portion.

### BRIEF DESCRIPTION OF DRAWINGS

Predetermined aspects, features, and advantages of the present disclosure are illustrated by the following detailed description with reference to the accompanying drawings.
FIG. 1 is a diagram illustrating a battery module according to an embodiment of present disclosure;
FIG. 2 is an exploded perspective diagram illustrating a battery module according to an embodiment of present disclosure;
FIG. 3 is a diagram illustrating a battery module according to an embodiment of present disclosure, viewed from side;
FIG. 4 is a perspective diagram illustrating a battery module according to an embodiment of present disclosure, viewed from the external side;
FIG. 5 is a perspective diagram illustrating a battery module according to an embodiment of present disclosure, viewed from the internal side;
FIG. 6 is a diagram illustrating a busbar assembly according to an embodiment of present disclosure, viewed from the internal side;
FIG. 7 is a diagram illustrating the example in FIG. 6, viewed from the bottom;
FIG. 8 is a perspective diagram in FIG. 6, viewed from the lower side;
FIG. 9 is a diagram illustrating an example in which a cell assembly is at least partially inserted into a busbar assembly according to an embodiment of present disclosure, viewed from the bottom;
FIG. 10 is a diagram illustrating an example in which sealing portions of adjacent battery cells are spaced apart from each other by a support guide according to an embodiment of present disclosure;
FIG. 11 is a diagram illustrating an example in which dielectric breakdown occurs during a process of assembling a general battery module;
FIG. 12 is a diagram illustrating an example in which dielectric breakdown is prevented during a process of assembling a battery module according to an embodiment of present disclosure;
FIG. 13 is an enlarged diagram illustrating A and B;
FIG. 14 is a diagram illustrating a portion of a busbar assembly according to an embodiment of present disclosure, viewed from the internal side;
FIG. 15 is a diagram illustrating the example in FIG. 14, viewed from the bottom; and
FIG. 16 is a perspective diagram illustrating the example in FIG. 14, viewed from the lower side.

### DETAILED DESCRIPTION

The embodiments of the present disclosure are illustrated in embodiments with reference to the accompanying drawings.

In the drawings, same elements will be indicated by same reference numerals. For ease of description, the same reference numerals may be used in different embodiments. That is, even when components having the same reference numerals are illustrated in a plurality of drawings, the plurality of drawings do not all refer to the same embodiment.

An expression used in the singular encompasses the expression of the plural, unless it has a clearly different meaning in the context. The terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

In the descriptions below, the terms such as an upper side, an upper portion, a lower side, a lower portion, a side surface, a front surface, a rear surface, and the like, may be denoted with respect to the directions indicated in the drawings, and may be represented differently when the direction of the component changes.

The terms "first," "second," and the like may be used to distinguish one element from the other, and may not limit a sequence and/or an importance, or others, in relation to the elements.

FIG. 1 is a diagram illustrating a battery module according to an embodiment. FIG. 2 is an exploded perspective diagram illustrating a battery module according to an embodiment. FIG. 3 is a diagram illustrating a battery module according to an embodiment, viewed from side.

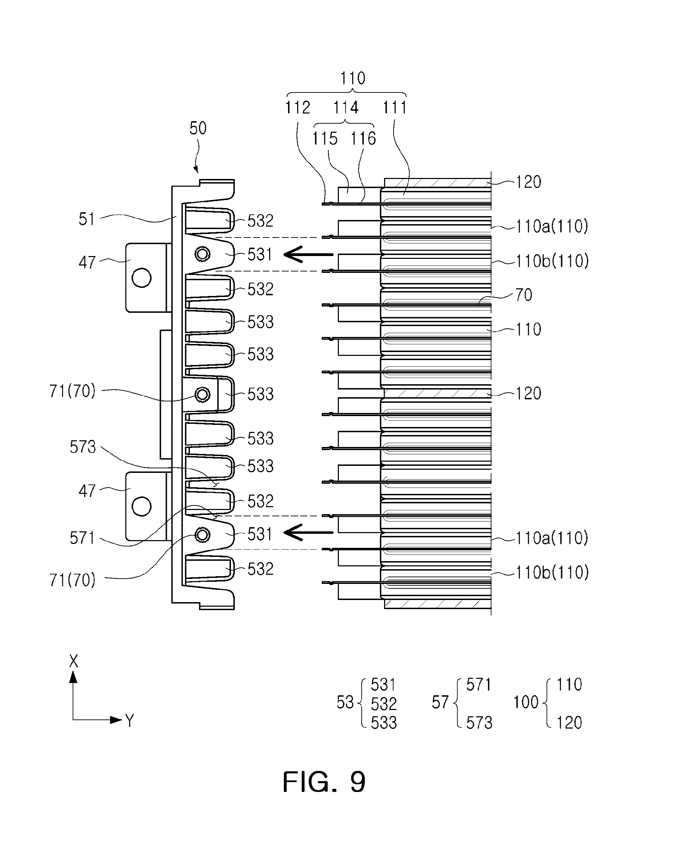

Referring to FIGS. 1 to 3 together, a battery module 10 according to an embodiment may include a plurality of battery cells 110, each including a case 111 and a sealing portion 114 provided on at least one edge of the case 111, and including first and second battery cells (100a and 100b, see FIG. 9) adjacent to each other in a first direction (X-axis direction); and a busbar assembly 30 disposed on at least one side of the plurality of battery cells 110, and including a support frame 50 into which at least a portion of the sealing portion 114 is inserted.

According to an embodiment, the support frame 50 may include a support guide 5313 configured to guide at least portions of the sealing portion 114 of the first battery cell 100a and the sealing portion 114 of the second battery cell 100a to be spaced apart from each other in opposite directions with respect to the first direction (X-axis direction).

Here, the configuration of being "spaced apart from each other" may indicate that at least one of the first battery cell 110a or the second battery cell 100b is spaced apart from the first support portion 531. Also, it may indicate that the first battery cell 110a and the second battery cell 110b of the plurality of battery cells (as described later in FIG. 9) are disposed and accommodated between the first support portion 531 and the second support portion 532 (that is, the first accommodation groove 571) among the plurality of battery cells 110 (as described later in FIG. 9).

Also, the battery module 10 according to an embodiment may include a cell assembly 100 including a plurality of battery cells 110 arranged (or stacked) in a predetermined direction (X-axis direction or first direction) and a housing 20 accommodating the cell assembly 100.

The housing 20 may include a first cover 21, a second cover 22 and an end cover 25 disposed on at least one side of the cell assembly 100. The end cover 25 may include a terminal hole 255 provided such that an electrode terminal 47 of a busbar assembly 30 described later may be exposed to outside of the housing 20.

The first cover (21; upper cover) may be disposed on an upper side (+Z-axis direction) of the cell assembly 100 and may cover an upper side of the cell assembly 100.

The second cover 22 may be disposed on a lower side (-Z-axis direction) of the cell assembly 100, may support the cell assembly 100 and may include a lower cover 23 opposing the upper cover 21, and a side cover 24 disposed in the arrangement direction (X-axis direction) of the cell assembly 100.

The end cover 25 may be disposed on at least one side in the direction perpendicular to the arrangement (or stacking) direction of the cell assembly 100 (Y-axis direction or second direction) and may oppose or faces the cell assembly 100 with the busbar assembly 30 interposed therebetween.

Also, the battery module 10 according to an embodiment may include a circuit portion 29 connected to the plurality of battery cells 110 and collecting and processing various data such as voltage, current, or temperature. The circuit portion 29 may be connected to a battery management system (BMS) and may transmit and receive predetermined signals for controlling the battery cells 110.

The cell assembly 100 may be arranged (or stacked) in a first direction (X-axis direction) in the housing 20 and may include a plurality of cell pads (120, see FIG. 9) in which a plurality of battery cells 110, at least a portion of which are disposed between the plurality of battery cells 110.

Each of the plurality of battery cells 110 may include a case 111 accommodating an electrode assembly (not illustrated) formed by stacking a cathode plate and a anode plate, and a lead tab 112 electrically connected to the electrode assembly in the case 111 and protruding to at least one side of the case 111.

The electrode assembly may be configured in a stacked form with a separator interposed between the cathode plate and the anode plate such that wide surfaces thereof may oppose each other. The separator may be configured to prevent electrical short-circuiting between the cathode plate and the anode plate and to allow ion flow. As an example, the separator may include a porous polymer film or a porous nonwoven fabric.

Also, the electrode assembly may be configured as a jelly roll type assembly wound in a predetermined direction, and may be accommodated in the case in various manners such as a stacking type, a Z-folding type, or a stack-folding type.

The plurality of battery cells 110 may be configured as a pouch-type, a prismatic-type, or a cylindrical-type secondary battery depending on the structure of the case 111.

In embodiments, in the battery cell 110, the case 111 may be formed in a pouch shape, and a pouch cell having at least one edge sealed is described, but an embodiment thereof is not limited thereto.

The case 111 of the battery cell 110 may include a body portion 113 accommodating the electrode assembly and a sealing portion 114 disposed on at least one edge of the body portion 113 and sealing the case 111.

The body portion 113 may indicate a portion not sealed as a space accommodating the electrode assembly. In other words, the body portion 113 may indicate a portion other than the sealing portion 114 in the case 111. According to an embodiment, one battery cell 110 may be arranged to oppose at least one surface of at least one of the body portion 113 of an adjacent battery cell 110 or an adjacent cell pad 120.

The sealing portion 114 may indicate at least one edge portion of the case 111 as a portion by which the case 111 is sealed. The sealing portion 114 may include a body sealing portion 115 in which the lead tab 112 is not disposed and a tab sealing portion 116 in which the lead tab 112 is disposed.

According to an embodiment, the sealing portion 114 may be disposed at three edges among four edges of the battery cell 110. That is, the case 111 may surround the electrode assembly folding a sheet of exterior material and may be sealed at the three unfolded edges.

As described above, according to an embodiment, the case 111 may be formed as a three-sided sealed structure in which four edges and three edges are sealed. Here, on the edge on which the sealing portion 114 is not formed (the edge disposed in the -Z-axis direction of the drawing), a protrusion 117 may be formed in which a portion of the case 111 protrudes further by a predetermined length a1 than the other portion (e.g., one edge of the body portion 113) in the direction.

This protrusion 117 may be referred to as a shark-fin, a Delta-fin, or a bat-ear.

In a state in which the plurality of battery cells 110 are accommodated in the battery module 10, the protrusion 117 of the battery cells 110 may protrude toward the lower cover 23. Since the protrusion 117 occupies more space by the protruding length a1 when accommodating the plurality of battery cells 110 in the housing 20, the protrusion 117 may be in contact with an adjacent disposed member, for example, a lower cover 23, such that dielectric breakdown may occur.

For example, the protrusion 117 may be in contact with a fastening portion 70 (see FIG. 12) according to the protruding length a1. The fastening portion 70 may be formed of a material including a metal for mechanical rigidity, and in this case, when the protrusion 117 is in contact with the fastening portion 70, a current of the battery cell 110 may leak to the fastening portion 70, which may deteriorate insulating performance of the battery module 10. Accordingly, according to an embodiment, the protrusion 117 may be guided to be bent or spread in a direction away from the fastening portion 70 by the guide groove 5713 formed by the support guide 5313 and the guide avoidance portion 5323 (see FIGS. 10 and 12). Also, as described below, according to an embodiment, the lower cover 23 may include a fin accommodation portion 231 including a fin accommodation groove 237 (see FIG. 13 'A') accommodating at least a portion of the protrusion 117 may be disposed in a position corresponding to the protrusion 117. A recess depth of the fin accommodation groove 237 may be greater than the protruding length a1 of the protrusion 117.

However, an embodiment is not limited to the example in which the case 111 has the three-sided sealing structure described above. For example, a pouch may be formed by overlapping two different exterior materials, and may be formed in a four-sided sealing portion in which the entirety of four edges around the pouch are sealed.

For example, according to an embodiment, the sealing portion 114 may include two tab sealing portions 116 in which lead tabs are disposed, and two other body sealing portions 115 in which lead tabs 112 are not disposed.

The busbar assembly 30 may be disposed on at least one side of the cell assembly 100. Specifically, the busbar assembly 30 may be disposed to oppose to the direction in which the lead tabs 112 protrude.

For example, when lead tabs 112 are formed on both sides in the length direction (e.g., Y-axis direction) of the plurality of battery cells 110 of the cell assembly 100, the busbar assembly 30 may be disposed on the both sides. However, an embodiment thereof is not limited thereto, and when the lead tabs 112 may be formed only in one direction (e.g., +Y-axis direction) differently from the drawing, the busbar assembly 30 may be disposed only in the one direction.

Also, at least a portion of the plurality of battery cells 110 may be inserted into the busbar assembly 30 (see FIG. 9). In this case, dielectric breakdown may occur by being in contact with an adjacent member depending on the angle at which the protrusion 117 protrudes, but according to an embodiment of the busbar assembly 30, the protrusion 117 may be directed to not cause interference with the adjacent member (see FIG. 12).

According to an embodiment, by controlling the protruding angle of the protrusion 117, dielectric breakdown may be prevented by being in contact with the adjacent member. As described above, the detailed structure of the busbar assembly 30 in which the protruding angle of the protrusion 117 may be adjusted will be described later in FIG. 4 and below.

FIG. 4 is a perspective diagram illustrating a battery module according to an embodiment, viewed from the external side. FIG. 5 is a perspective diagram illustrating a battery module according to an embodiment, viewed from the internal side.

Referring to FIGS. 4 and 5, the busbar assembly 30 according to an embodiment may include one or more busbars 40 electrically connecting a plurality of battery cells 110 to each other and a support frame 50 on which the busbars 40 are mounted.

The busbar 40 may be electrically connected to the electrode terminal 47 by including a conductive material such as a metal. Accordingly, the busbar 40 may be electrically connected to the lead tabs 112 and the electrode terminals 47 of the plurality of battery cells 110. The busbar 40 may be disposed on one surface (e.g., a surface opposing the -Y-axis direction) of the frame body 51 of the support frame 50.

The busbar 40 may include a slit (45, see FIG. 6) into which at least a portion of the lead tab 112 is inserted. The busbar slit 45 may be in communication with a support hole (55, see FIG. 6) formed in the support frame 50. The lead tab 112 may pass through the support hole 55 and the slit 45 and may be electrically connected to the busbar 40.

The support frame 50 may include a frame body 51 disposed between the busbar 40 and the cell assembly 100, a plurality of support portions 53 protruding from the frame body 51 in a direction toward the cell assembly 100, and an accommodation groove 57 formed such that at least a portion of the battery cell 110 is accommodated therein.

More specifically, according to an embodiment, the support frame 50 may include a frame body 51 disposed to oppose the plurality of battery cells 110 and a plurality of support portions 53 including a first support portion 531 and a second support portion 532 adjacent to the first support portion 531 protruding between the first battery cell 110a and the second battery cell 110b. Here, the support guide 5313 may protrude to at least to one side in the direction from the first support portion 531 to the second support portion 532.

Also, since the first support portion 531 and the second support portion 532 may be disposed adjacently in the first direction (X-axis direction), the support guide 5313 may protrude from the first support portion 531 in the first direction.

The support guide 5313 may be formed integrally with the first support body 5311 and may be detachably provided from the first support body 5311. That is, the support guide 5313 may be detachably provided from the first support portion 531. The support frame 50 may be provided such that the busbar 40 may be stably seated. The support frame 50 may have predetermined rigidity and may include a non-conductive material such as plastic.

A plurality of the support portion 53 may be provided. The plurality of support portions 53 may include at least one of a first support portion 531 including a support guide (5313, see FIG. 6) to be described later, a second support portion 532 including a guide avoidance portion (5323, see FIG. 6) opposing the support guide 5313, and a third support portion 533 in which the support guide 5313 and the guide avoidance portion 5323 are not formed.

The protrusion angles of the two battery cells 110 opposing the first support portion 531 may be arranged to be spaced apart from each other by the space between the support guide 5313 and the guide avoidance portion 5323 (the guide groove; 5713).

According to an embodiment, the plurality of support portions 53 may include one or more array structures in which two second support portions 532 are disposed with one first support portion 531 therebetween. The third support portion 533 may be disposed to not oppose the first support portion 531. That is, according to an embodiment, with respect to two adjacent second support portions 532, the first support portion 531 may be disposed on the inner side (between the two second support portions; 532) and the third support portion 533 may be disposed on the outer side.

However, an embodiment thereof is not limited thereto, and two third support portions 533 may be disposed with the first support portion 531 therebetween, or the second support portion 532 and third support portion 533 may be disposed with the first support portion 531 therebetween.

In the description below, two neighboring second support portions 552 may be disposed with the first support portion 531 therebetween, but the example may also be applied to the other structures described above in an overlapping range.

An accommodation groove 57 may be formed between the plurality of support portions 53. At least a portion of the battery cell 110, specifically, at least a portion of the tab sealing portion 116 may be inserted into the accommodation groove 57 formed between the two neighboring support portions 53. The battery cell 110 may be partially inserted into the accommodation groove 57 formed between the two neighboring support portions 53, and the arrangement may be supported by the two neighboring support portions 53. That is, the accommodation groove 57 may indicate a space formed by two adjacent support portions 53.

The accommodation groove 57 may include a first accommodation groove 571 formed between the first support portion 531 and another support portion 53 and a second accommodation groove 573 formed between another support portion 53 other than the first support portion 531.

In an embodiment, the first accommodation groove 571 may be formed between the first support portion 531 and the second support portion 532 adjacent to each other or between the first support portion 531 and the third support portion 533.

In an embodiment, the second accommodation groove 573 may be formed at least one of a region between the second support portion 532 and the third support portion 533, which are adjacent to each other, a region between the second accommodation groove 573 and the second accommodation groove 573, which are adjacent to each other, or a region between the third support portion 533 and the third support portion 533, which are adjacent to each other.

Also, according to an embodiment, the second support portion 532 may be disposed adjacent to both sides of the first support portion 532 in the stacking direction (first direction or X-axis direction) of the battery cell 110, and the third support portion 533 may be disposed adjacently to the second support portion 532 or the third support portion 533. As described above, since the first support portion 531 and the second support portion 532 are disposed adjacently, the support guide 5313 and the guide avoidance portion 5323 may also oppose each other. In this case, the shape of the support guide 5313 and the shape of at least a portion may correspond to each other.

Also, according to an embodiment, the accommodation groove 57 may include a first accommodation groove 571 defined as a space between the first support portion 531 and the second support portion 532 and a second accommodation groove 573 defined as a space between the second support portion 532 and the second support portion 532 or the third support portion 533. Here, as described above, at least a portion of the first accommodation groove 571 may be bent in a predetermined direction.

Here, the configuration in which the component "may be defined as a space between" may indicate that the accommodation groove 57 may be disposed between the plurality of support portions 53. That is, the plurality of support portions 53 may be spaced apart from each other in the first direction (X-axis direction), and in this case, the accommodation groove 57 may indicate the spacing.

Accordingly, the first accommodation groove 571 may be disposed between the first support portion 531 and the second support portion 532, and the second accommodation groove 573 may be disposed between the second support portion 532 and the second support portion 532 or the second support portion 533. As will be described later, at least portions of the first battery cell 110a and the second battery cell 110b adjacent to each other may be inserted through the first accommodation groove 571.

Hereinafter, the structure of the support frame 50 may be described in greater detail.

FIG. 6 is a diagram illustrating a busbar assembly according to an embodiment of present disclosure, viewed from the internal side. FIG. 7 is a diagram illustrating the example in FIG. 6, viewed from the bottom. FIG. 8 is a perspective diagram in FIG. 6, viewed from the lower side.

Referring to FIG. 6, as described above, the accommodation groove 57 may be formed by a plurality of support portions 53 protruding from the frame body 51. That is, the accommodation groove 57 may be defined as a space formed between a plurality of support portions 53.

A support hole 55 through which a lead tab 112 may pass may be formed in the accommodation groove 57. The busbar 40 may be disposed in the frame body 51 such that the slit 45 may communicate with the support hole 55. The lead tab 112 may pass through the support hole 55 and the slit 45 in sequence and may be electrically connected to the busbar 40. The lead tab 112 may be connected to the busbar 40 by a method such as ultrasonic welding or laser welding in the slit 45.

The accommodation groove 57 may include a first accommodation groove 571 formed between the first support portion 531 and another support portion 53 and a second accommodation groove 573 formed between other support portions 53 other than the first support portion 531. Widths b1 and b2 of the first accommodation groove 571 and widths b3 and b4 of the second accommodation groove 573 may be determined in predetermined ranges in consideration of the amount of gas generated in the battery cell 110.

In an embodiment, the first accommodation groove 571 may include a support groove 5711 formed between the first support body 5311 and the second support body 5321 and a support hole 55 and a guide groove 5713 formed between the support guide 5313 and the guide avoidance portion 5323. Also, the guide groove 5713 may be defined as a space between the support guide 5313 and the guide avoidance portion 5323, and the support groove 5711 may be defined as a space of the first accommodation groove 571 other than the guide groove 5713, that is, a space other than a region between the support guide 5313 and the guide avoidance portion 5323.

Also, the width of the support groove 5711 may be formed by the first distance b1. That is, the first support body 5311 and the second support body 5321 may be spaced apart from each other by the first distance b 1.

The narrowest width of the guide groove 5713 may be formed by the second distance b2. That is, the distance between the support guide 5313 and the guide avoidance portion 5323 may be spaced apart from each other by at least the second distance b2.

In an embodiment, the distance of the lowermost portion of the guide groove 5713 may be provided as the second distance b2, which may be the same as the second guide distance c2 described later. However, in another embodiment, the second guide distance c3 may be configured to be greater than the second distance b2 by the support chamfer 5315 formed in the support guide 5313 (see FIGS. 14 and 15).

As described above, at least a portion of the cutout shape of the guide avoidance portion 5323 may correspond to at least a portion of the protruding shape of the support guide 5313.

In an embodiment, the support guide 5313 may include both a shape of which the protruding size may increases in the protruding direction of the protrusion 117 (e.g., -Z-axis) and a shape of which a size increases in the direction toward the frame body 51 (e.g., -Y-axis). The guide avoidance portion 5323 may have a shape in which a size cut out from the second support body 5321 increases in the protruding direction (e.g., -Z axis) of the protrusion 117, and may correspond to the support guide 5313.

Here, the configuration in which the "guide avoidance portion 5323 and the support guide 5313 may correspond to each other" may indicate that when the support guide 5313 has a shape in which a size protruding increases in a predetermined direction, the guide avoidance portion 5323 may also have a shape in which a cutout size increases in the predetermined direction. Also, the configuration may indicate that the protruding size (or, protrusion width increase rate) of the support guide 5313 in the predetermined direction and the cutout size (or cutout width increase rate) of the guide avoidance portion 5323 may be the same in a predetermined error range.

In the drawing, the protruding size of the support guide 5313 may increase downwardly toward the frame body 51 and the cutout size of the guide avoidance portion 5323 may increase downwardly.

The support groove 5711 may accommodate at least a portion of the tab sealing portion 116 of the battery cell 110 such that the lead tab 112 may pass through the support hole 55 and the slit 45. The guide groove 5713 may accommodate at least one of the tab sealing portion 116 or the protrusion 117 when at least a portion of the battery cell 110 is inserted. The tab sealing portion 116 or the protrusion 117 disposed in the guide groove 5713 may be bent in the protruding direction thereof by the support guide 5313 (see FIG. 10). That is, in the first accommodation groove 571, the support groove 5711 may support the battery cells 110 in a predetermined arrangement, and the guide groove 5713 may change the protruding direction of the protrusion 117 (see FIG. 12).

Referring to FIG. 12, the configuration of "changing the protruding direction of the protrusion 117" described herein may indicate that the protruding angles f1 and f2 of the protrusion 117 protruding downwardly (-Z-axis direction) in the tab sealing portion 116 may be changed.

The guide groove 5713 may be bent to a predetermined angle with respect to the support groove 5711, which may be varied depending on the corresponding shapes of the support guide 5313 and the guide avoidance portion 5323, and the specific descriptions will be described later.

The first distance b1 and the second distance b2 may be equal to each other in a predetermined error range, but an embodiment thereof is not limited thereto. For example, the second distance b2 may be smaller than the first distance b1. This is because the structure including the tab sealing portion 116 and the lead tab 112 may be inserted or passed through the first distance b1, whereas the tab sealing portion 116 or the protrusion 117 may be inserted through the second distance b2. That is, considering the thickness of the lead tab 112 and the amount of gas generated during charging and discharging of the battery cell 110, the first distance b1 may be greater than the second distance b2.

In an embodiment, the second accommodation groove 573 may include a third distance b3 of a portion in which the support hole 55 is formed and a fourth distance b4 of a portion in which at least a portion of the lower side (-Z-axis direction) of the tab sealing portion 116 is accommodated. The third distance b3 and the fourth distance b4 may be equal to each other in a margin of error, but as described above, considering the lead tab 112 and the amount of gas generated, the third distance b3 may be greater than the fourth distance b4.

Referring to FIG. 6 and FIG. 7 together, the first support portion 531 may include a first support body 5311 protruding in a direction (e.g., +Y-axis direction) toward the cell assembly 100 from the frame body 51 and a support guide 5313 provided on the first support body 5311 and protruding to at least one side in a direction (second direction or X-axis direction) to the arrangement direction of the battery cell 110.

The support guide 5313 may protrude from at least one side of the first support body 5311 in a direction (first direction or X-axis direction) toward an adjacent support portion 53. The support guide 5313 may guide by bending an angle of at least one of the tab sealing portion 116 or the protrusion 117 when a portion of the battery cell 110 is inserted into the first accommodation groove 571 (see FIG. 10).

The support guide 5313 may be formed in a position opposing the protrusion 117 among the upper portion side (+Z-axis direction) and the lower portion side (-Z-axis direction) of the first support body 5311. For example, when the protrusion 117 is disposed at the lower portion side (-Z-axis direction) of the battery cell 110 (see FIG. 3) and at least a portion thereof is inserted into the accommodation groove 57 (see FIG. 9), the support guide 5313 may be disposed closer to the lower portion side (-Z-axis direction). In an embodiment, the protrusion 117 may be arranged at the lower portion side (-Z-axis direction) of the battery cell 110, or vice versa.

The support guide 5313 may include a shape which may guide the protrusion 117 to be spaced apart from the first support portion 531 with respect to the adjacent direction (first direction or X-axis direction).

Referring to FIG. 6, the support guide 5313 may include a shape of which a size protruding from the first support portion 531 increases in the direction (-Z-axis direction) toward the lower cover 23. That is, the support guide 5313 may be provided as a shape of which a size may gradually increase toward the lower cover 23.

Also, referring to FIG. 7, the support guide 5313 may include a shape of which a size protruding from the first support portion 531 increases in the direction (-Y-axis direction) toward the frame body 51. That is, the support guide 5313 may include a shape of which a width gradually increases toward the frame body 51.

That is, according to an embodiment, the support guide 5313 may include a shape of which the protruding size gradually increases toward the lower cover 23, or/and a shape of which the protruding size gradually increases toward the frame body 51.

For example, the support guide 5313 may be formed to include at least one of a shape of which the protruding size increases toward the upper portion side (+Z-axis direction) to the lower portion side (-Z-axis direction or protruding direction of protrusion; 117), or a shape of which the protruding size increases in the direction toward the frame body 51 (e.g., -Y direction) in the direction toward the cell assembly 100 (e.g., +Y-axis direction).

That is, the support guide 5313 may include at least one of a shape of which the protruding size increases in the direction (-Y-axis direction) toward the frame body 51 or a shape of which the protruding size increases toward the lower portion side (-Z-axis direction).

In the drawing, the support guide 5313 may have both the shape of which the protruding size increases toward the lower portion side (-Z-axis direction) and the shape of which the protruding size increases in the direction toward the frame body 51. In this case, at least a portion of the sealing portion 114 may be spread regardless of the insertion direction of the battery cell 110.

Specifically, the battery cell 110 may be inserted into the support frame 50 in one of the direction (-Z-axis direction) toward the lower cover 23 or the direction (-Y-axis direction) toward the frame body 51. In the above case, regardless of the direction in which the battery cell 110 is inserted into the support frame 50, the protrusion 117 of the battery cell 110 may be gradually bent by the support guide 5313. That is, the protrusion 117 and the support guide 5313 may be prevented from interfering with each other depending on the insertion direction of the battery cell 110. As described above, the support guide 5313 may push the protrusion 117 in the direction toward the neighboring support portion 53 when a portion of the battery cell 110 is inserted into the first accommodation groove 571 through the shape in which the protruded size increases (see FIG. 10).

The support guide 5313 formed in the first support body 5311 may be formed integrally, and may also be provided to be detachable if desired. In other words, the support guide 5313 may be integrally formed from the first support body 5311 and may protrude, as well as may be coupled to and detachable from the first support body 5311.

According to an embodiment, the second support portion 532 may include a second support body 5321 protruding in a direction from the frame body 51 toward the cell assembly 100 and a guide avoidance portion 5323 formed by being cut out from the second support body 5321. Here, the guide avoidance portion 5323 may include a shape in which a width of being cut out increases in the direction (-Z-axis direction) toward the lower cover 23 (see FIG. 6).

The guide avoidance portion 5323 may be formed in a position opposing the support guide 5313. That is, the guide avoidance portion 5323 may be formed to oppose at least one of a portion close to the protrusion 117 in the protrusion 117 or the tab sealing portion 116.

For example, the guide avoidance portion 5323 may be formed to include at least one of a shape in which a size cut out from the second support body 5321 increases from the upper portion side (+Z-axis direction) to the lower portion side (-Z-axis direction or protruding direction of the protrusion; 117) or a shape in which a size cut out from the second support body 5321 increases in a direction far from the cell assembly 100 (e.g., -Y-axis direction) in a direction close to the cell assembly 100 (e.g., +Y-axis direction).

As described above, the guide avoidance portion 5323 may be formed by being cut out from the second support body 5321 with a shape corresponding to at least a portion of the support guide 5313.

For example, the support guide 5313 may have both a shape in which the protruding size increases downwardly as illustrated in the drawing and a shape in which the protruding size increases in the direction toward the frame body 51. In this case, the guide avoidance portion 5323 may be formed such that the size cut out from the second support body 5321 may increase downwardly.

In other words, according to an embodiment, the second support portion 532 of the busbar assembly 30 may include a guide avoidance portion 5323 formed by being cutout to oppose the support guide 5313, and the guide avoidance portion 5323 may be provided such that the cutout size may increases downwardly (-Z-axis direction) such that the shape of at least a portion thereof may correspond to the shape of at least a portion of the support guide 5313.

The lower side (-Z-axis direction) of the first accommodation groove 571, more specifically, the lower side of the guide groove 5713, may accommodate at least a portion of the protrusion 117 or the portion close to the protrusion 117 of the tab sealing portion 116 (see FIGS. 10 and 12). Accordingly, among the distances of the guide groove 5713, particularly, the distance of the lower surface may be important in accommodating and guiding the protrusion 117.

The guide groove 5713 may extend downwardly from the support groove 5711 in a direction of being spaced apart from the first support portion 531. That is, by the support guide 5313 and the guide avoidance portion 5323, the guide groove 5713 may be formed by being bent at a predetermined angle from the support groove 5711.

In other words, according to an embodiment, the first accommodation groove 571 may include the guide groove 5713, which may be defined by a space between the support guide 5313 and the guide avoidance portion 5323, and the support groove 5711, which may be defined by a space not opposing the support guide 5313 and the guide avoidance portion 5323, and the guide groove 5713 may form a predetermined angle with the support groove 5711. Due to the shape of the support guide 5313 and the guide avoidance portion 5323 described above, the distance of the lower surface of the guide groove 5713 (the distance of the lowermost side between the support guide 5313 and the guide avoidance portion 5323) may gradually decrease from the first guide distance c1 to the second guide distance c2 in the entering direction (e.g., - Y-axis direction, see FIG. 9) of the battery cell 110.

Accordingly, when the battery cell 110 enters the first accommodation groove 571, the protrusion 117 may be easily accommodated in the guide groove 5713 due to the first guide distance c1, which may be relatively large, initially (before the battery cell 110 completely enters). As the battery cell 110 advances further, the protruding direction of the protrusion 117 may be gradually changed by the support guide 5313, and when the battery cell 110 is fully advanced, the protruding direction of the protrusion 117 may be modified to a direction corresponding to the angle indicated by the support guide 5313 by the second guide distance c2.

In other words, even when the protrusion 117 may protrude irregularly, such as protruding in a direction other than downwardly (-Z-axis direction), the battery cell 110 may be easily advanced by providing a predetermined distance.

Accordingly, when the battery cell 110 advances into the busbar assembly 30, the angle at which the protrusion 117 protrudes may gradually change.

According to an embodiment, the support groove 5711 may be disposed parallel to the first support portion 531, and the guide groove 5713 may extend by being bent at a predetermined angle below the support groove 5711.

Also, according to an embodiment, the guide groove 5713 may be bent in a direction of being spaced apart from the first support portion 531. Specifically, the guide groove 5713 may be bent in the first direction (X-axis direction).

In the embodiment described above, the entering direction of the battery cell 110 may oppose the direction (e.g., Y-axis direction) of the busbar assembly 30, but the battery cell 110 may be inserted into the accommodation groove 57 while entering downwardly (e.g., the protruding direction of the protrusion 117).

In this case, the angle at which the protrusion 117 protrudes may change while passing through the support groove 5711 and the guide groove 5713 in sequence. That is, according to an embodiment, the protrusion 117 of the first support portion 531 and the two neighboring battery cells 110 may be spaced apart from each other regardless of the entering direction of the battery cell 110.

Hereinafter, when the battery cell 110 is mounted on the busbar assembly 30, the structure in which the protrusion 117 of the two neighboring battery cells 110 are spaced apart from each other may be described in detail.

FIG. 9 is a diagram illustrating an example in which a cell assembly is at least partially inserted into a busbar assembly according to an embodiment, viewed from the bottom. FIG. 10 is a diagram illustrating an example in which sealing portions of adjacent battery cells are spaced apart from each other by a support guide according to an embodiment.

Referring to FIG. 9, a cell assembly 100 including a plurality of battery cells 110 may enter toward a support frame 50 of a busbar assembly 30.

The cell assembly 100 may include a cell pad 120 disposed between the plurality of battery cells 110 and the plurality of battery cells 110, which may be stacked or arranged in a predetermined direction (first direction or X-axis direction).

The cell pad 120 may be disposed between the plurality of battery cells 110 and may bond the plurality of battery cells 110, adjacent to each other, to each other or may absorb vibration or impacts. For example, the cell pad 120 may include a material having low thermal conductivity and may prevent heat transmission between adjacent battery cells 110. Accordingly, in the event of an abnormal event occurring in one battery cell 110, heat may be prevented from transmitting to an adjacent battery cell 110. However, this is merely an example, and the cell pad 120 may be formed of a material having high thermal conductivity.

When the cell assembly 100 enters the busbar assembly 30, at least a portion of the plurality of battery cells 110, specifically, the tab sealing portion 116, may be inserted into the accommodation groove 57.

The plurality of battery cells 110 may include a first battery cell 110a and a second battery cell 110b, disposed adjacent to each other in the first direction (X-axis direction). Specifically, among the plurality of battery cells 110, the battery cells 110 adjacent to the first support portion 531, that is, the battery cells 110 having at least a portion accommodated in the first accommodation groove 571, may be defined as the first battery cell 110a and the second battery cell 110b, respectively. That is, the battery cell 110 having at least a portion inserted between the first support portion 531 and the two adjacent second support portions 532 may be defined as the first battery cell 110a and the second battery cell 110b, respectively. Also, among the plurality of battery cells 110, the cells may be defined as the first battery cell 110a and the second battery cell 100b with the fastening portion 70 therebetween.

The first battery cell 110a and the second battery cell 110b may be relatively determined in a relationship with at least one of the support portion 53, the first accommodation groove 571, or the fastening portion 70 among the plurality of battery cells 110, as described above, and the detailed configuration thereof may be the same as that of another plurality of battery cells 110, other than a difference in the arrangement position.

FIG. 10 illustrates a state in which the first battery cell 110a and the second battery cell 110b are partially accommodated in the first accommodation groove 571. Referring to the drawing, the protrusions 117a and 117b may be spaced apart from each other by the support guide 5313 and the guide avoidance portion 5323, respectively.

More specifically, the support guide 5313 and the guide avoidance portion 5323 opposing the first battery cell 110a may be defined as the first support guide 5313a and the first guide avoidance portion 5323a, respectively, and the support guide 5313 and the guide avoidance portion 5323 opposing the second battery cell 110b may be defined as the second support guide 5313b and the second guide avoidance portion 5323b, respectively.

Referring to FIG. 10, the protrusion (117a; first protrusion) of the first battery cell 110a may be guided in a direction (-X-axis direction) of being spaced apart from the second battery cell 110b by the first support guide 5313a and the first guide avoidance portion 5323a. Also, the protrusion (117b; second protrusion) of the second battery cell 110b may be guided in a direction (+X-axis direction) of being spaced apart from the first battery cell 110a by the second support guide 5313b and the second guide avoidance portion 5323b. That is, according to an embodiment, at least one of the protrusion 117a of the first battery cell 110a or the protrusion 117b of the second battery cell 110b may be guided in a direction of being spaced apart from the first support portion 531

Accordingly, the direction in which the first protrusion 117a and the second protrusion 117b protrude may be changed to the direction of being spaced apart from each other (e.g., the angle at which they protrude along the -X axis, respectively) from the lower side (e.g., the -Z-axis direction) (see FIG. 12). Accordingly, the protrusions 117a and 117b may be prevented from interfering with the fastening portion 70.

As described above, the housing 20 may include a metal material to assure mechanical rigidity. For example, the housing 20 may include an electrically conductive metal material such as iron, aluminum, or stainless steel.

Referring back to FIG. 2, in an embodiment, since the protrusion 117 protrudes toward the lower side (the -Z-axis direction), in order to prevent the protrusion 117 and the lower cover 23 from being in contact with each other, the fin accommodation portion 231 forming a fin accommodation groove (237, see FIG. 13) accommodating the protrusion 117 may be disposed in a position opposing the protrusion 117 in the lower cover 23.

That is, the lower cover 23 may include a fin accommodation portion 231 including a fin accommodation groove 237 in which at least a portion of the protrusion 117 is accommodated.

The fin accommodation portion 231 may include an electrically insulating material such as plastic, or MICA. However, the fin accommodation portion 231 is not limited to a specific material, and may include the same material as that of the lower cover 23 in order to assure mechanical rigidity.

The fin accommodation portion 231 may prevent the protrusion 117 and the housing 20, specifically the lower cover; 23, from being in direct contact with each other.

According to an embodiment, the fin accommodation portion 231 may include a fastening hole 75 into which a third fastening portion 73, which will be described later, is inserted. The upper surface (231a, see ` A' in FIG. 13) of the fin accommodation portion 231 and the lower surface (531a, see 'B' in FIG. 13) of the first support portion 531, in which the first fastening portion 71 is formed, may be coupled to each other by the fastening portion 70. The details of the coupling structure may be described later. For example, the third fastening portion 73 may be configured as a bolt member for coupling the first fastening portion 71 and the second fastening portion 72 to each other. However, an embodiment, but an embodiment thereof is not limited thereto.

Referring to FIGS. 12 and 13, the embodiment may further include a fastening portion 70 for coupling the busbar assembly 30 and the lower cover 23 to each other. The fastening portion 70 may include a first fastening portion 71 formed on the busbar assembly 30, a second fastening portion 72 formed in a portion opposing the first fastening portion 71 and including a fastening hole 75, and a third fastening portion 73 penetrating the fastening hole 75 and coupling the first fastening portion and the second fastening portion to each other.

Specifically, according to an embodiment, the fastening portion 70 may include a first fastening portion 71 provided on a lower surface of the first support portion 531, a second fastening portion 72 formed in a fastening hole opposing the first fastening portion 71, and a third fastening portion 73 configured to couple the first fastening portion 71 and the second fastening portion 72 to each other. Here, the protrusion 117a of the first battery cell 110a and the protrusion 117b of the second battery cell 110b may be spaced apart from each other in opposite directions with respect to the first direction in the fastening portion 70. The first fastening portion 71 may be formed on the lower surface 531a of the support frame 50, specifically, the first support portion 531 on which the support guide 5313 is formed, and the second fastening portion 72 may be formed on the lower cover 23 in a position opposing the first fastening portion 71. In an embodiment, since the fin accommodation portion 231 is disposed on the lower cover 23 to oppose the support frame 50, the second fastening portion 72 may be formed on the fin accommodation portion 231. That is, the second fastening portion 72 may be formed on at least one of the lower cover 23 or the fin accommodation portion 231

In the drawing, the second fastening portion may be formed in the lower cover 23 and the fin accommodation portion 231, such that the fastening hole 75 may penetrate both the lower cover 23 and the fin accommodation portion 231, and the third fastening portion may pass the components and may be coupled to the first fastening portion 71. However, an embodiment thereof is not limited thereto, and a structure for coupling the busbar assembly 30 and the lower cover 23 may be modified.

Here, when the protrusion 117 is caught between the lower surface (531a; first coupling surface) of the first support portion 531 in the embodiment and the upper surface (231a; second coupling surface) of the fin accommodation portion, a current of the battery cell 110 may leak through the fastening portion 70, which may cause dielectric breakdown.

As described above, according to an embodiment, dielectric breakdown due to the protrusion 117 during the assembly process of the busbar assembly 30 and the lower cover 23 may be prevented (see the right diagram in FIG. 12). The specific description thereof may be described with reference to the drawings.

FIG. 11 is a diagram illustrating an example in which dielectric breakdown occurs during a process of assembling a general battery module. FIG. 12 is a diagram illustrating an example in which dielectric breakdown is prevented during a process of assembling a battery module according to an embodiment.

The coupling structure of the general battery module may be described with reference to FIG. 11. The general battery module may be supported by inserting the first battery cell BC1 and the second battery cell BC2 between the first support portion SP1 and the two second support portions SP2 of the busbar assembly. Since the first support portion SP1 and the second support portion SP2 do not have separate guide members, the two spaces therebetween may not be bent. In this case, angles of the protrusions F1 and F2 protruding from the sealing portions S1 and S2 of the first and second battery cells BC1 and BC2 may not be separately guided.

In the general battery module, the first fastening member T1 may be formed in a lower portion of the first support portion SP1, and the second fastening member T2 having the throughhole TH to oppose the first fastening member T1 may be formed on the lower cover LC. Accordingly, the bolt portion BT may couple the lower cover LC to the busbar assembly while being coupled to the first fastening member T1.

As described above, in the general battery module, when the first protrusion F1 and the second protrusion F2 are bent from the sealing portions S1 and S2 in a direction of approaching each other during the assembling process (see the left diagram in FIG. 11), the protrusions F1 and F2 may be caught between the first fastening member T1 and the second fastening member T2 (see the right diagram in FIG. 11).

At least one of the fastening members T1 and T2 and the bolt portion BT may include an electrically conductive metal material for mechanical rigidity. In this case, current may leak due to the protrusion 117.

That is, in the general battery module, since the protruding direction of protrusions F1 and F2 is not constant, during assembly, the component may be in contact with members not having insulation, such as fastening members T1 and T2. Accordingly, in the case of a general battery module, dielectric breakdown may occur due to the protrusions F1 and F2, which may cause a serious safety hazard, such as the risk of shorts.

Referring to FIG. 12, according to an embodiment, by allowing the protrusions 117a and 117b of two adjacent battery cells 110a and 110b to be spaced apart from each other in an opposing direction with the first support portion 531 as the center, interference with the fastening portion 70 formed on the first support portion 531 may be structurally prevented, thereby reducing dielectric breakdown in the battery module 10. That is, according to an embodiment, the distance between the protrusion 117a of the first battery cell 110a and the protrusion 117b of the second battery cell 110b may increase toward the lower cover 23 (that is, in the -Z-axis direction).

Here, the configuration of "being spaced apart from" may indicate that at least one of the protrusions 117a and 117b of the first battery cell 110a and the second battery cell 110b may be directly guided in a direction away from the first support body 5311, thereby changing the protruding angles of the protrusions 117a and 117b to predetermined angles f1 and f2.

Alternatively, among the portions of the tab sealing portions 116 of the first battery cell 110a and the second battery cell 110b, the portions adjacent to the protrusions 117a and 117b may be guided in a direction away from the first support body 5311, thereby changing the protruding angles of the protrusions 117a and 117b to predetermined angles f1 and f2.

That is, by the support guide 5313 according to an embodiment, at least one portion of the tab sealing portion 116 of at least one of the first battery cell 110a or the second battery cell 110b may be bent in a direction away from the first support body 5311 (see the right diagram in FIG. 12).

More specifically, by the support guide 5313 and the guide avoidance portion 5323, the protrusions 117a and 117b on both sides of the first support portion 531 may be bent so as to be spaced apart from each other. The protrusions 117a and 117b may be guided so as to form predetermined angles f1 and f2 by which the tab sealing portions 116 of the first and second battery cells 110a and 110b and each protrusion 117a and 117b are spaced apart from each other.

In other words, the guide groove 5713, in which the protrusion 117 is accommodated, may be bent at a predetermined angle from the support groove 5711 by the support guide 5313 and the guide avoidance portion 5323. Accordingly, the first protrusion 117a and the second protrusion 117b, accommodated in the first accommodation groove 571, may be separated from each other in a direction of being spaced apart from each other. Accordingly, according to an embodiment, the protrusion 117 may be in contact with the fastening portion 70, thereby preventing or reducing dielectric breakdown.

Also, the protruding angle f1 of the first protrusion 117a and the protruding angle F2 of the second protrusion 117b may be varied depending on the shape of the support guide 5313 and the guide avoidance portion 5323. However, an embodiment thereof is not limited thereto, and when the protrusion 117 is not interposed between the first support portion 531 and the lower cover 23, the same angle f1=f2 may be formed.

According to an embodiment, as illustrated in the drawing, the protrusion 117 may not be accommodated in the guide groove 5713, and a portion close to the protrusion 117 in the tab sealing portion 116 may be accommodated in the guide groove 5713. That is, since the protrusion 117 extends downwardly from the tab sealing portion 116, the protruding angle of the protrusion 117 may be adjusted simply by bending a portion of the tab sealing portion 116.

As described above, an embodiment in which any structure including a support guide 5313 and a guide avoidance portion 5323 which may guide the protruding angle of the protrusion 117 to be spaced apart from the first support portion 531 may be included.

FIG. 13 is an enlarged diagram illustrating A and B. "A" is an enlarged diagram illustrating the upper surface (231a; second coupling surface) in which the fastening hole 75 is formed in the fin accommodation portion 231 and which is in contact with the busbar assembly (30, specifically, the first support portion; 531). "B" is an enlarged diagram illustrating the lower surface (531a; first coupling surface) of the first support portion 531, the portion in which the first fastening portion 71 is formed.

According to an embodiment, during the process of assembling the battery module 10, the busbar assembly 30 and the lower cover 23 may be coupled to each other by the fastening portion 70. In particular, as described above, during the coupling process, the upper surface 231a of the fin accommodation portion 231 and the lower surface 531a of the first support portion 531 may be in contact with each other.

According to an embodiment, the area of the lower surface 531a of the first support portion 531 (the hatched portion of 'B') may be configured to be larger than the area of the upper surface 231a of the fin accommodation portion 231 (the hatched portion of "A"). That is, the lower surface 531a may be provided to cover the upper surface 231a.

In this case, the guided protrusion 117 adjacent to the first support portion 531 may be effectively prevented from being in contact with the upper surface 231a of the fin accommodation portion 231.

FIG. 14 is a diagram illustrating a portion of a busbar assembly according to an embodiment, viewed from the internal side. FIG. 15 is a diagram illustrating the example in FIG. 14, viewed from the bottom. FIG. 16 is a perspective diagram illustrating the example in FIG. 14, viewed from the lower side.

FIGS. 14 to 16 are diagrams illustrating another embodiment in which a guide chamfer 5315 is formed in a support guide 5313. Hereinafter, within the scope overlapping the above-described description in the embodiment, the description will not be provided, and the portion added to another embodiment will be mainly described.

Referring to FIGS. 14 to 16 together, a guide chamfer 5315 may be formed at an end of a lower portion side (-Z-axis direction) of a support guide 5313 of a battery module 10 according to another embodiment. Through the guide chamfer 5315, the tab sealing portion 116 or the protrusion 117 may be prevented from being worn by the support guide 5313.

The guide chamfer 5315 may be formed by cutting out the most protruding portion of the support guide 5313. For example, according to another embodiment, a guide chamfer 5315 cutout from an edge directed to a lower portion (-Z-axis direction) may be formed. The guide chamfer 5315 may reduce an area in contact with the first support portion 531 and the battery cell 110. Accordingly, wear of the tab sealing portion 116 or the protrusion 117 of the battery cell 110 may be reduced.

A width of a lower surface of the guide groove 5713 may decrease from c1 to c3 in a direction toward the frame body 51. Due to the guide chamfer 5315, the second guide distance c3 in another embodiment may be greater than the second guide distance c2 described above in FIG. 7.

The guide chamfer 5315 may include a shape in which a size of being cut out from the support guide 5313 increases in the direction (e.g., -Y-axis direction) toward the frame body 51.

According to another embodiment, the support guide 5313 may be configured to be detachably from the first support body 5311. Similarly, the support guide 5313 on which the guide chamfer 5315 is formed may be separated from the first support body 5311 or coupled thereto.

Also, according to an embodiment, depending on the arrangement of the battery cells 110, the support guide 5313 may be separated from the first support portion 531 and may be mounted on the second support portion 532 or the third support portion 533. Accordingly, the degree of freedom in design of the support portion 53 depending on the arrangement of the battery cells 110 may be improved.

The battery module 10 in an embodiment may belong to an embodiment as long as the module may be accommodated in the housing 20 such that at least a portion of the sealing portion 114 of the first battery cell 110a and the second battery cell 110b may be spaced apart from each other through the first support portion 531, regardless of the support guide 5313.

Specifically, a battery module 10 according to another embodiment may include a plurality of battery cells 110 including a first battery cell 110a and a second battery cell 110b adjacent to each other in the first direction (X-axis direction), each including a case 111 and a sealing portion 114 provided on at least one edge of the case 111, a lower cover 23 disposed downwardly (-X-axis direction) from the plurality of battery cells 110, a frame body 51 disposed to oppose the plurality of battery cells 110, and a first support portion 531 protruding between the plurality of battery cells 110 in the frame body 51 and disposed between the sealing portion 114 of the first battery cell 110a and the sealing portion 114 of the second battery cell 110b. Here, at least portions of the sealing portion 114 of the first battery cell 110a and the sealing portion 114 of the second battery cell 110b may be spaced apart from each other in opposite directions with respect to the first support portion 531 toward the lower cover 23.

Accordingly, the sealing portion 114 of the first battery cell 110a and the sealing portion 114 of the second battery cell 110b may be spaced apart from each other with respect to the first direction (X-axis direction).

The busbar assembly 30 in an embodiment may include a frame body 51 on one surface of which a busbar 40 is seated, a plurality of support portions 53 protruding from the other surface of the frame body 51 opposite to the one surface and spaced apart from each other in the first direction (X-axis direction), and a plurality of support portions 53 disposed between the accommodation groove 57 and into which at least a portion of the battery cell is inserted. Here, the plurality of support portions 53 may include a first support portion 531 including a support guide 5313 protruding in the first direction (X-axis direction or adjacent to each other), a second support portion 532 disposed adjacently to the first support portion 531 in the first direction, and a third support portion 533 disposed not adjacently to the first support portion 531.

The busbar assembly 30 in an embodiment is described together with the battery module 10 described above, and thus, the overlapping descriptions will not be provided.

The configuration in which the third support portion 533 may be disposed not adjacently to the first support portion 531 may indicate that the third support portion 533 may be disposed adjacently to at least one of the second support portion 532 or the third support portion.

According to the aforementioned embodiments, degradation of insulating performance of a battery module may be reduced or prevented.

Also, dielectric breakdown caused by shark fin of the battery cell in contact with an adjacent member may be reduced or prevented.

Also, at least a portion of a plurality of battery cells may be inserted into the busbar assembly such that the sealing portions of adjacent battery cells may be spaced apart from each other.

Only specific examples of implementations of predetermined embodiments are described. Variations, improvements and enhancements of the disclosed embodiments and other embodiments may be made with respect to the disclosure of this patent document.

## Claims

1. A battery module, comprising:
a plurality of battery cells, each including a case and a sealing portion provided on at least one edge of the case, and the plurality of battery cells include a first battery cell and a second battery cell adjacent to each other in a first direction; and
a support frame faces the plurality of battery cells and into which at least a portion of the sealing portion is inserted,
wherein the support frame includes a support guide configured to guide at least a portion of the sealing portion of the first battery cell and at least a portion sealing portion of the second battery cell to be spaced apart from each other in opposite directions with respect to the first direction.

2. The battery module of claim 1, further comprising:
a lower cover disposed below the plurality of battery cells,
wherein each of the plurality of battery cells includes a protrusion protruding from the case toward the lower cover, and
wherein a distance between a protrusion of the first battery cell and a protrusion of the second battery cell increases toward the lower cover.

3. The battery module of claim 1 or 2,
wherein the support frame includes:
a frame body opposing the plurality of battery cells; and
a plurality of support portions including a first support portion protruding between the first battery cell and the second battery cell and a second support portion adjacent to the first support portion, and
wherein the support guide protrudes to at least one side in a direction from the first support portion toward the second support portion.

4. The battery module of any one of claims 1 to 3, wherein the support guide includes at least one of a shape in which a size of protrusion from the first support portion increases in a direction toward the lower cover, or a shape in which a size of protrusion from the first support portion increases in a direction toward the frame body.

5. The battery module of claim 3 or 4,
wherein the second support portion includes a guide avoidance portion formed by cutting out a portion opposing the support guide, and
wherein the guide avoidance portion includes a shape in which a cutout width increases in a direction toward the lower cover and a shape of at least a portion of the guide avoidance portion corresponds a shape of at least a portion of the support guide.

6. The battery module of any one of claims 3 to 5, wherein the support guide is provided to be detachable from the first support portion.

7. The battery module of any one of claims 1 to 6, wherein the support guide includes a guide chamfer cutout at an edge directed downwardly.

8. The battery module of any one of claims 3 to 7, wherein the lower cover includes a fin accommodation portion including a fin accommodation groove in which at least a portion of the protrusion is accommodated, and
wherein an area of a lower surface of the first support portion is greater than an area of an upper surface of the fin accommodation portion opposing the lower surface of the first support portion.

9. The battery module of any one of preceding claims, further comprising:
a fastening portion including a first fastening portion provided on a lower surface of the first support portion, a second fastening portion in which a fastening hole opposing the first fastening portion is formed, and a third fastening portion configured to couple the first fastening portion to the second fastening portion,
wherein a protrusion of the first battery cell and a protrusion of the second battery cell are spaced apart from each other in opposite directions with respect to the first direction in the fastening portion.

10. The battery module of any one of claims 3 to 10,
wherein the sealing portion of the first battery cell and the sealing portion of the second battery cell are spaced apart from each other in opposite directions with respect to the first support portion as at least portions thereof approaches the lower cover.

11. The battery module of any one of preceding claims, wherein the support frame comprises:
a frame body in which a busbar is seated on one surface thereof;
a plurality of support portions protruding from the other surface of the frame body opposite to the one surface of the frame body and spaced apart from each other in the first direction; and
an accommodation groove disposed between the plurality of support portions and into which at least a portion of a battery cell is inserted,
wherein the plurality of support portions includes:
a first support portion including the support guide protruding in the first direction;
a second support portion disposed adjacently to the first support portion in the first direction; and
a third support portion disposed not adjacently to the first support portion.

12. The battery module of claim 11,
wherein the accommodation groove includes:
a first accommodation groove defined as a space between the first support portion and the second support portion; and
a second accommodation groove defined as a space between the second support portion and the second support portion or the third support portion,
wherein at least a portion of the first accommodation groove is bent in a predetermined direction.

13. The battery module of any one of claims 10 to 12,
wherein the first support portion includes a support guide protruding toward the second support portion, and the second support portion includes a guide avoidance portion disposed to oppose the support guide,
wherein the first accommodation groove includes:
a guide groove defined as a space between the support guide and the guide avoidance portion; and
a support groove defined as a space not opposing the support guide and the guide avoidance portion, and
wherein the guide groove forms a predetermined angle with the support groove.

14. The battery module of any one of claims 10 to 13,
wherein the support groove is disposed parallel to the first support portion, and
wherein the guide groove extends by being bent at a predetermined angle in a lower portion of the support groove.

15. The battery module of any one of claims 10 to 14, wherein the guide groove is bent in a direction away from the first support portion.
